# FASCICULE DE BREVET EUROPEEN

(11) **EP 3 774 412 B1**
(45) Date de publication et mention de la délivrance du brevet: **11.01.2023**
(21) Numéro de dépôt: 19715880.1
(22) Date de dépôt: 02.04.2019
(51) Int. Cl.: B60G 17/0165, B60G 17/08, B60G 17/018

(54) **PROCÉDÉ DE PILOTAGE D'AMORTISSEURS DE VÉHICULE AU PASSAGE D'UN DOS D'ÂNE**
VERFAHREN ZUR STEUERUNG VON FAHRZEUGSTOSSDÄMPFERN BEIM FAHREN ÜBER EINE STRASSENSCHWELLE
METHOD FOR DRIVING VEHICLE DAMPERS UPON PASSING OVER A HUMP

(30) Priorité: 06.04.2018 FR 1852990
(43) Date de publication de la demande: 17.02.2021
(73) Titulaire: Renault s.a.s, 92100 Boulogne Billancourt (FR)
(72) Inventeur: KOBIELA, Gregory, 27400 Incarville (FR); PAURON, Clément, 78000 Versailles (FR); BRUNEAU, Frédéric, 27400 Incarville (FR)
(74) Mandataire: Renault Group
(86) Numéro de dépôt international: PCT/EP2019/058242
(87) Numéro de publication internationale: WO 2019/192986

(56) Documents cités:
- EP-A1- 2 487 057
- DE-A1-102014 208 318
- KR-A- 20150 064 541

## Description

L'invention concerne un procédé de pilotage d'amortisseurs de véhicule, un produit programme pour effectuer des étapes du procédé, un calculateur pour exécuter le produit programme, et un véhicule automobile comprenant le calculateur.

On connait déjà des procédés de pilotage d'amortisseurs de véhicule comme par exemple celui décrit dans le document EP2487057A1, dans lesquels un courant électrique alimentant une électrovanne ou un champ magnétique au sein de l'amortisseur, permet d'en faire varier le coefficient d'amortissement en fonction de la valeur du courant électrique.

Les procédés connus sont généralement utilisés dans des stratégies de lutte contre une mauvaise route basse fréquence (MRBF) en adaptant la fonction de transfert de l'amortisseur à la fréquence des imperfections détectées sur la route. Cependant, les procédés connus ont pour inconvénients de ne pas répondre de manière satisfaisante à une imperfection isolée, notamment à celle que présente un dos d'âne.

On connait aussi un procédé de pilotage d'amortisseurs de véhicule au passage d'un dos d'âne comme celui décrit dans le document DE 10 2014 208 318 A1, dans lequel la détection et la classification des dos d'âne peuvent être effectuées à l'aide d'un système de capteurs d'environnement anticipatif, par exemple un système de caméra ou des scanners laser et/ou des radars, ou à l'aide des signaux des capteurs de course.

Pour remédier aux inconvénients de l'état antérieur de la technique, l'invention a pour objet un procédé de pilotage d'amortisseurs de véhicule au passage d'un dos d'âne, caractérisé en ce qu'il comprend des étapes consistant à :
- calculer en permanence un différentiel de mesures temps réel de vitesses de roues ;
- détecter un rampant montant après franchissement d'au moins un seuil par ledit différentiel de mesures temps réel ;
- positionner un courant électrique de pilotage d'amortisseur avant sur une première valeur de courant maximale à détection d'un rampant montant de dos d'âne pour obtenir un coefficient d'amortissement élevé sur les roues avant ;
- positionner ledit courant électrique de pilotage d'amortisseur avant sur une deuxième valeur de courant inférieure à ladite première valeur de courant dès que le véhicule a parcouru, après détection du rampant montant, une première distance représentative d'une longueur du rampant montant, pour obtenir un coefficient d'amortissement moins élevé sur les roues avant.

Avantageusement, le procédé de pilotage comprend des étapes consistant à :
- positionner un courant électrique de pilotage d'amortisseur arrière sur une troisième valeur de courant maximale dès que le véhicule a parcouru, après détection du rampant montant, une deuxième distance égale à l'empattement du véhicule, pour obtenir un coefficient d'amortissement élevé sur les roues arrière ;
- positionner ledit courant électrique de pilotage d'amortisseur arrière sur une quatrième valeur de courant inférieure à ladite troisième valeur de courant dès que le véhicule a parcouru, après détection du rampant montant, une troisième distance représentative d'une somme de longueur de rampant montant et d'empattement, pour obtenir un coefficient d'amortissement moins élevé sur les roues arrière.

Particulièrement, le procédé de pilotage comprend une étape consistant à :
- positionner ledit courant électrique de pilotage d'amortisseur arrière sur une cinquième valeur de courant comprise entre ladite troisième et ladite quatrième valeur de courant, après détection du rampant montant et tant que le véhicule n'a pas parcouru ladite deuxième distance égale à l'empattement du véhicule, pour préparer une élévation de coefficient d'amortissement sur les roues arrière.

Avantageusement aussi, le procédé de pilotage comprend des étapes consistant à :
- positionner ledit courant électrique de pilotage d'amortisseur avant sur une sixième valeur de courant inférieure à la deuxième valeur de courant, dès détection d'un rampant descendant de dos d'âne pour réduire le coefficient d'amortissement sur les roues avant ;
- positionner ledit courant électrique de pilotage d'amortisseur avant sur une septième valeur de courant supérieure à ladite sixième valeur de courant dès que le véhicule a parcouru après détection du rampant descendant, une quatrième distance représentative d'une somme de longueur de rampant descendant et de longueur d'empattement, pour réaugmenter le coefficient d'amortissement sur les roues avant.

Particulièrement, le procédé de pilotage comprend des étapes consistant à :
- positionner ledit courant électrique de pilotage d'amortisseur arrière sur une huitième valeur de courant comprise entre ladite troisième valeur de courant et ladite quatrième valeur de courant dès détection de rampant descendant, pour obtenir un coefficient d'amortissement moyennement élevé sur les roues arrière ;
- positionner ledit courant électrique de pilotage d'amortisseur arrière sur une neuvième valeur de courant comprise entre ladite deuxième valeur de courant et ladite troisième valeur de courant dès que le véhicule a parcouru, après détection du rampant descendant, ladite deuxième distance égale à l'empattement du véhicule, pour obtenir un coefficient d'amortissement plus élevé sur les roues arrière.

Particulièrement le différentiel est égal au maximum des vitesses de rotation des roues avant, duquel on soustrait la moyenne des vitesses de rotation des roues du véhicule.

Plus particulièrement, le rampant montant est détecté après un premier franchissement de seuil négatif suivi d'un deuxième franchissement de seuil positif.

Particulièrement aussi, le procédé de pilotage comprend une étape consistant à :
- détecter un rampant descendant après franchissement d'au moins un seuil par ledit différentiel de mesures temps réel après avoir détecté le rampant montant.

L'invention a aussi pour objet un calculateur pour piloter des amortisseurs de véhicule automobile comprenant une interface électronique de communication avec un réseau embarqué de manière à recevoir une valeur mesurée de la vitesse de rotation de chaque roue, un processeur pour exécuter un programme de façon à générer des courants électriques de pilotage des amortisseurs et une mémoire qui héberge le produit programme d'ordinateur comprenant des instructions pour effectuer les étapes dudit procédé lorsque ces instructions sont exécutées par le processeur.

L'invention a encore pour objet un produit programme d'ordinateur comprenant des instructions qui conduisent ledit calculateur à effectuer les étapes dudit procédé lorsque ces instructions sont exécutées par le processeur du calculateur.

L'invention a enfin pour objet un véhicule automobile comprenant un réseau embarqué et ledit calculateur connecté audit réseau embarqué.

D'autres caractéristiques et avantages de l'invention seront mieux compris à la lecture de la description d'un mode de réalisation nullement limitatif, et illustré par les dessins annexés, sur lesquels :
- la figure 1 montre un véhicule automobile qui s'apprête à aborder un dos d'âne ;
- la figure 2 montre des étapes de procédé conforme à l'invention ;
- la figure 3 montre des étapes de procédé complétant celles de la figure 2 dans un mode préféré de réalisation de l'invention ;
- la figure 4 montre un exemple de profils de courants électriques de pilotage d'amortisseurs, obtenus par mise en œuvre des étapes de la figure 2.

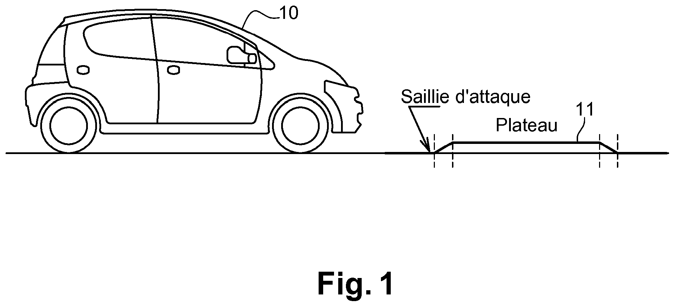

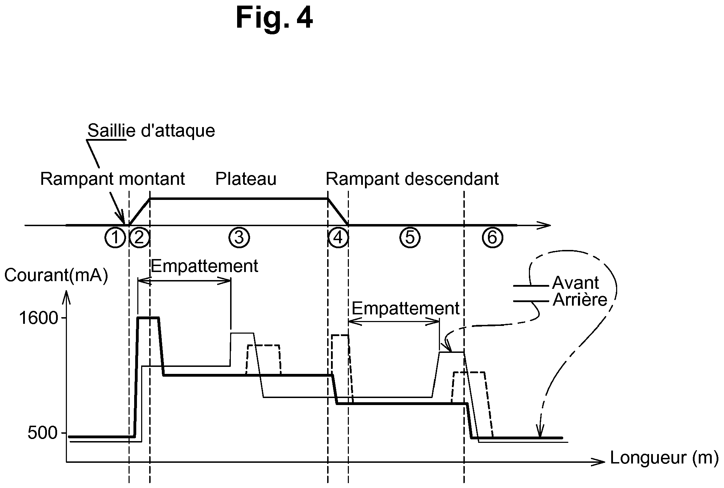

La figure 1 montre un véhicule 10 arrivant sur un dos d'âne 11. La figure 4 montre en partie supérieure un schéma agrandi du dos d'âne 11. On distingue sur le schéma une zone 1 qui précède le dos d'âne, une zone 2 constituée d'un rampant montant du dos d'âne, une zone 3 constituée d'un plateau, une zone 4 constituée d'un rampant descendant du dos d'âne, une zone 5 qui succède au dos d'âne sur laquelle les effets du dos d'âne se font généralement ressentir, et enfin une zone 6 comparable à la zone 1 dans laquelle on attend généralement du véhicule d'avoir repris sa situation initiale avant passage du dos d'âne.

Le véhicule automobile 10 comprend de manière connue en soi par ailleurs, (non représentées) deux roues avant et deux roues arrière équipées chacune d'un capteur de vitesse de rotation de roue et d'un amortisseur à coefficient d'amortissement piloté en courant. Le véhicule automobile 10 comprend aussi de manière connue en soi par ailleurs, (non représentés) au moins un réseau embarqué de type CAN, LIN, Ethernet Automobile ou autre, et un ou plusieurs calculateurs connectés à au moins l'un des réseaux embarqués ainsi que connectés ou non par des coupleurs d'entrée-sortie à un ou plusieurs capteurs, à un ou plusieurs actionneurs, voire à un ou plusieurs dispositifs d'affichage.

A titre purement illustratif, une architecture système courante comprend un calculateur de type ABS/ESP recevant la valeur mesurée de chaque capteur de vitesse de rotation de roue, et transmettant ces valeurs mesurées sur le réseau embarqué auquel il est connecté.

Une architecture système conforme à l'invention comprend un calculateur pour piloter les amortisseurs du véhicule automobile comprenant une interface électronique de communication avec le réseau embarqué de manière à recevoir la valeur mesurée de la vitesse de rotation de chaque roue. Le calculateur pour piloter les amortisseurs comporte une mémoire qui héberge divers programmes d'ordinateur et un processeur pour exécuter le ou les programmes hébergés de façon à générer des courants électriques iav de pilotage des amortisseurs sur les roues avant et iar de pilotage des amortisseurs sur les roues arrière.

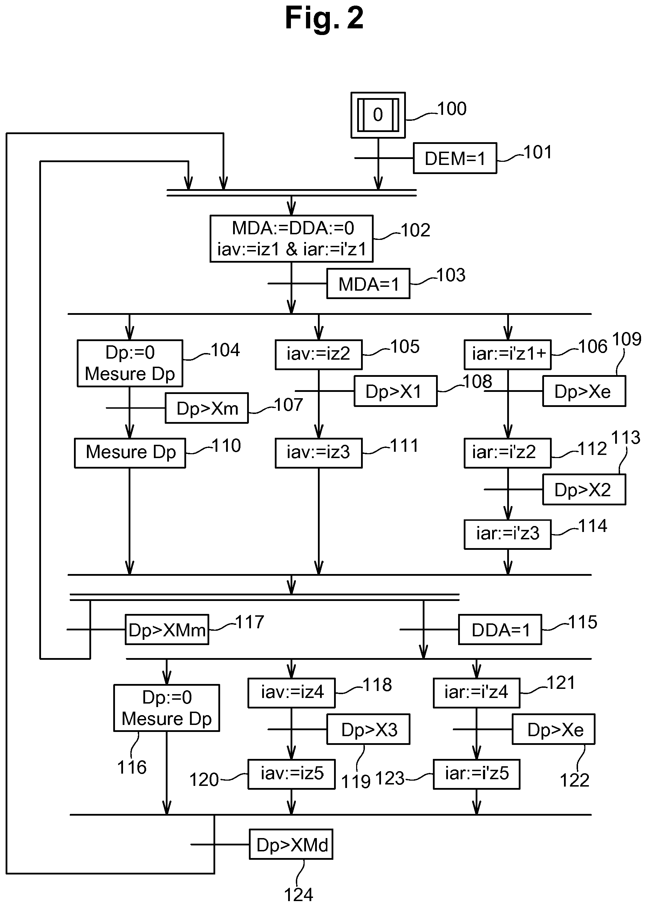

Notamment, le calculateur pour piloter les amortisseurs conforme à l'invention, comporte un processeur apte à exécuter un produit programme d'ordinateur hébergé en mémoire du calculateur ou accessible par réseau de communication, comprenant des instructions pour effectuer des étapes du procédé expliqué ci-dessous en référence à la figure 2 lorsque ces instructions sont exécutées par le processeur.

Le procédé de pilotage d'amortisseurs du véhicule 10 au passage d'un dos d'âne, notamment d'un dos d'âne semblable au dos d'âne 11 s'amorce à partir d'une étape initiale 100 de repos, par exemple au passage d'une transition 101 validée par un signal de démarrage du moteur ou par un autre signal tel qu'une mise sous contact électrique du véhicule, ou une requête de l'utilisateur d'exécuter le procédé. La possibilité d'exécuter ou non le procédé sur requête de l'utilisateur, offre à ce dernier une liberté supplémentaire en comparaison d'un procédé qui s'exécute systématiquement.

Le procédé est alors mis dans une étape 102 de veille en attente de détection d'un dos d'âne ou d'un autre type de ralentisseur équivalent. En étape 102, les amortisseurs peuvent être pilotés en courant par un autre procédé hors du cadre de la présente invention, comme par exemple un procédé de mise en œuvre de stratégie MRBF (Mauvaise Route Basse Fréquence) pour adapter le coefficient d'amortissement des amortisseurs à la qualité de la chaussée. En étape 102, les courants de pilotage iav des roues avant et iar des roues arrière sont positionnés sur des valeurs respectivement iz1 et i'z1 qui sont par exemple celles propres à une mise en œuvre de l'autre procédé, lesquelles peuvent aussi être constantes par défaut en absence d'autre stratégie, à titre d'exemple purement illustratif sur la figure 4 au voisinage de 500 mA.

Une étape 105 consiste à positionner le courant électrique iav de pilotage d'amortisseur avant sur une première valeur de courant iz2 maximale à détection d'un rampant montant de dos d'âne pour obtenir un coefficient d'amortissement élevé sur les roues avant. Le durcissement des amortisseurs de roues avant qui résulte du coefficient d'amortissement élevé, a pour effet de s'opposer à une compression trop forte des ressorts de suspension susceptible de provoquer un phénomène de rebond.

Une transition 103 de passage de l'étape 102 à l'étape 105, est validée par une valeur de signal MDA (Montée Dos d'Ane) qui indique une détection de rampant montant. Dans l'exemple illustré par la figure 2, on a choisi d'indiquer une détection de rampant montant par un passage de zéro à un du signal MDA. Ce choix sera conservé dans la suite de la description par souci de cohérence mais on comprendra qu'il est purement conventionnel et que tout autre choix de valeurs équivalentes peut convenir.

On pourrait imaginer que le signal MDA de détection de rampant montant soit produit par un capteur dédié à cet effet, par exemple un accéléromètre vertical ou autre.

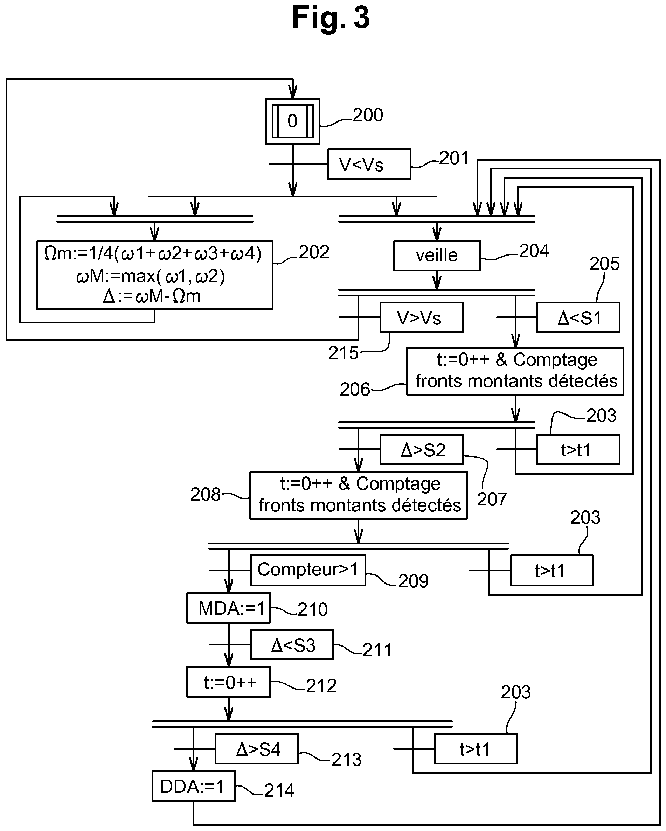

La figure 3 montre une séquence d'étapes de procédé permettant de détecter le rampant montant sans autres capteurs que ceux existant déjà habituellement aujourd'hui sur la grande majorité des véhicules.

La séquence d'étapes dédiée à la détection de rampant montant, sans chercher à savoir si c'est une montée de dos d'âne ou autre, est exécutée en permanence en temps réel après s'être amorcée à partir d'une étape initiale 200 de repos, par exemple au passage d'une transition 201 validée par une vitesse V du véhicule inférieure à une vitesse Vs de seuil, par exemple de 40 km/h en deçà de laquelle il est raisonnable de passer sur un dos d'âne.

La séquence particulière d'étapes du procédé, dédiée à la détection de rampant montant, débute alors par une étape 204 de veille en attente de validation d'une transition 205 pour passer à des étapes suivantes, sous réserve que la vitesse V du véhicule est inférieure à la vitesse Vs de seuil.

Une transition 215 est validée si la vitesse V du véhicule devient supérieure à la vitesse Vs de seuil pour faire repasser le procédé de l'étape 204 de veille à l'étape initiale 200 de repos. Ainsi, lorsque le véhicule roule en dehors des zones de limitation de vitesse pour lesquelles des ralentisseurs de type dos d'âne ou autres sont installés, la séquence d'étapes de détection de rampant montant n'est pas exécutée.

Parallèlement à l'étape 204 et aux étapes suivantes de l'étape 204, une étape 202 consiste à calculer en permanence un différentiel Δ de mesures temps réel de vitesses de roues ω1, ω2, ω3, ω4. Une vitesse de rotation moyenne Ωm des quatre roues du véhicule, est calculée à chaque période d'échantillonnage sur le bus embarqué du véhicule. Une vitesse de rotation maximale ωM des deux roues avant du véhicule, est prise égale à la plus grande des deux vitesses ω1, ω2 de rotation des roues avant. Le différentiel Δ de mesures temps réel est obtenu en soustrayant la vitesse de rotation moyenne Ωm de la vitesse de rotation maximale ωM. En d'autres termes, le différentiel Δ est égal au maximum des vitesses de rotation ω1, ω2 des roues avant, duquel on soustrait la moyenne des vitesses de rotation ω1, ω2, ω3, ω4 des roues du véhicule.

La vitesse de rotation moyenne Ωm est, de manière connue en soi par ailleurs, généralement proportionnelle à la vitesse V de déplacement longitudinal du véhicule. Tant que le véhicule se déplace en ligne droite sur une chaussée uniforme, les vitesses des quatre roues sont sensiblement égales, et par conséquent, le différentiel Δ de mesures temps réel est sensiblement nul. Lorsque le véhicule prend un virage sur une chaussée uniforme, la vitesse ω1 ou ω2 de rotation de la roue avant extérieure au virage, est supérieure à respectivement la vitesses ω2 ou ω1 de rotation de la roue avant intérieure au virage, et dans ce cas, la vitesse de rotation maximale ωM des deux roues avant du véhicule, est égale à la vitesse ω1, ou respectivement ω2 de rotation de la roue avant extérieure au virage.

Ainsi, le différentiel Δ de mesures temps réel est négatif lorsque la vitesse des roues avant est inférieure à la vitesse moyenne de rotation des roues, laquelle est représentative de la vitesse de déplacement du véhicule. Ce phénomène est observable lorsque les roues avant buttent contre un obstacle, notamment en abordant une saillie d'attaque d'un dos d'âne.

Un premier seuil S1 paramétrable, est fixé au cours d'essais sur piste d'un véhicule de test, à une valeur négative suffisamment basse au plus juste pour être représentative de la saillie d'attaque de dos d'âne par les roues avant. La valeur du premier seuil S1 est ensuite figée en mémoire de calculateur pour les véhicules de série du même type que le véhicule de test. La valeur du premier seuil S1 peut aussi éventuellement être adaptée au pays dans lequel le véhicule de série est homologué pour tenir compte de la législation du pays en termes de ralentisseurs.

Un franchissement du premier seuil S1, provoqué par une valeur du différentiel Δ de mesures temps réel qui devient inférieure à la valeur négative du premier seuil S1, valide alors une transition 205 qui fait passer le procédé de l'étape 204 à une étape 206.

L'étape 206 est essentiellement une étape d'attente de franchissement d'un deuxième seuil S2, cette fois positif, par le différentiel Δ de mesures temps réel de vitesses de rotation des roues, pour les raisons expliquées ci-dessous.

Lorsque les roues avant évoluent en zone 2 sur le rampant montant, on peut considérer le rampant montant comme l'hypoténuse d'un triangle rectangle dont un côté d'angle droit est constitué par une ligne de la chaussée coplanaire à la zone 1 sur laquelle continuent d'évoluer les roues arrière du véhicule. Il apparaît alors que la vitesse de rotation maximale ωM des deux roues avant du véhicule en zone 2, est supérieure à la vitesse de rotation moyenne Ωm des quatre roues, la longueur de l'hypoténuse étant supérieure à la longueur de côté d'angle droit.

Le deuxième seuil S2 paramétrable, est fixé au cours d'essais sur piste du véhicule de test, à une valeur positive suffisamment haute au plus juste pour être représentative de la pente du rampant montant par les roues avant. La valeur du premier seuil S2 est ensuite figée en mémoire de calculateur pour les véhicules de série du même type que le véhicule de test, éventuellement adapté à la pente du rampant montant en fonction du pays d'homologation du véhicule de série.

Un franchissement du deuxième seuil S2, provoqué par une valeur du différentiel Δ de mesures temps réel qui devient supérieure à la valeur positive du deuxième seuil S2, valide alors la transition 207 qui fait passer le procédé à une étape 208.

Chaque franchissement de seuil S1, S2 est considéré comme front montant d'un signal de détection de seuil, qui est compté dans les étapes 206, 208. Une valeur de compteur strictement supérieure à l'unité, garanti ainsi deux franchissements de seuil successifs, représentatifs d'un rampant montant à saillie d'attaque. Cette valeur de compteur de fronts montants détectés, alors au moins égale à deux, valide une transition 209 pour activer une étape 210.

On peut aussi prévoir par sécurité, dans une variante particulière de mise en œuvre, d'armer une temporisation à zéro dans l'une ou l'autre, ou dans chacune des étapes 205, 206, de façon à valider une transition 203 de retour à l'étape de veille 204 en cas de durée t supérieure à une valeur tl de temporisation sans être passer dans l'étape suivante pour aboutir à l'étape 210.

L'étape 210 permet de détecter le rampant montant en positionnant la valeur du signal MDA (Montée Dos d'Ane) par exemple à 1 en cohérence avec l'exemple illustré sur par la figure 2, sachant bien que toute autre valeur équivalente et non nécessairement binaire, en cohérence avec celle retenue pour activer les étapes de la figure 2 convient.

Revenant à l'étape 105 expliquée en référence à la figure 2, la première valeur de courant iz2 maximale a pour but de lutter contre la compression brutale sur le train avant du véhicule que l'on observe habituellement avec des amortisseurs non pilotés. En étape 105, la valeur maximale de courant iz2 sur laquelle est positionné le courant électrique iav de pilotage d'amortisseur avant, n'est pas nécessairement la valeur la plus élevée permise par la spécification de l'amortisseur mais elle s'en approche. La notion de maximale est à considérer comme étant la plus élevée en comparaison avec les autres valeurs de courant positionnées dans le procédé. Pour un type d'amortisseur donné, la valeur maximale de courant iz2 peut varier en fonction de paramètres extérieurs au procédé comme par exemple le paramètre qualifiant le type de véhicule, le paramètre qualifiant le mode de conduite choisi « sportif », « confort » ou autre, le paramètre qualifiant le poids en charge du véhicule, le paramètre qualifiant la vitesse v du véhicule mesurée ou calculée au moment de la validation de la transition 103, ou d'autre paramètre à la libre appréciation du concepteur du véhicule. A titre de simple exemple non limitatif comme illustré par la figure 4, une valeur de 1600 mA a permis d'obtenir de bons résultats au cours d'essais sur circuits, cette valeur correspondant à une utilisation de toute la capacité d'amortissement de l'amortisseur testé.

Parallèlement à l'étape 105 est activée une étape 104 qui consiste à mesurer en temps réel une distance parcourue Dp initialisée à zéro en début d'activation de l'étape 104. La distance Dp parcourue par le véhicule à partir de la détection de rampant montant, est généralement calculable de manière connue en soi par ailleurs, à partir des mêmes capteurs que ceux qui donnent les vitesses de rotation des roues.

Une étape 111 consiste à positionner le courant électrique iav de pilotage d'amortisseur avant sur une deuxième valeur de courant iz3 inférieure à la première valeur de courant iz2 lorsque les roues avant ont quitté la zone 2 de rampant montant. Des essais sur circuit ont montré qu'une valeur de iz3 comprise sensiblement à mi-chemin entre les valeurs de iz1 et de iz2, par exemple sensiblement égale à 1000 mA, donnait de bons résultats.

Une transition 108 pour passer de l'étape 105 à l'étape 111, pourrait être validée par une détection de l'atteinte du plateau en zone 3, sur lequel les vitesses de rotation des roues avant ont de fortes chances de redevenir égales à la vitesse de rotation moyenne des quatre roues.

Des essais ont montré qu'un critère plus fiable consiste à valider la transition 108 dès que le véhicule 10 a parcouru après détection (103) du rampant montant, une première distance X1 représentative d'une longueur du rampant montant. Les dos d'âne ou autres ralentisseurs obéissent généralement à des règles de dimensionnement pour lesquelles la longueur du rampant montant est connue.

Dès le rampant montant passé, les amortisseurs de roues avant ont tendance en absence de contrôle, à partir brutalement en détente. Des courants élevés pour obtenir un coefficient d'amortissement élevé, permettent de réduire la brutalité de détente. En comparaison de celui produit en étape 105, le coefficient d'amortissement moins élevé sur les roues avant, obtenu en étape 111, permet aux amortisseurs de reprendre suffisamment rapidement leur position initiale.

Après validation de la transition 103 par détection du rampant montant, une transition 109 est validée dès que le véhicule 10 a parcouru une deuxième distance Xe égale à l'empattement du véhicule, en d'autres termes une distance qui sépare les roues avant des roues arrière. La validation de la transition 109 correspond à l'atteinte du rampant montant par les roues arrière.

La transition 109 active une étape 112 consistant à positionner le courant électrique iar de pilotage d'amortisseur arrière sur une troisième valeur de courant i'z2 maximale, pour obtenir un coefficient d'amortissement élevé sur les roues arrière. L'étape 112 appliquée aux roues arrière, est comparable à l'étape 105 appliquée aux roues avant. Cependant, la valeur de courant i'z2 est ici considérée maximale au regard des valeurs sur lesquelles est à positionné le courant électrique iar de pilotage d'amortisseur arrière au cours du procédé. Une valeur de courant i'z2 moins élevée que la valeur de courant iz2 permet une compression suffisante des amortisseurs arrière pour éviter un basculement trop prononcé vers l'avant du véhicule par soulèvement de l'arrière, lequel pourrait avoir pour effet de recomprimer les amortisseurs avant. Dans l'exemple illustré par la figure 4, la valeur de courant i'z2 est de l'ordre de 1500 mA.

Une étape 114 consiste à positionner le courant électrique iar de pilotage d'amortisseur arrière sur une quatrième valeur de courant i'z3 inférieure à la troisième valeur de courant i'z2 lorsque les roues arrière ont quitté la zone 2 de rampant montant. Dans l'exemple illustré par la figure 4, une valeur de iz'3 comprise sensiblement à mi-chemin entre les valeurs de i'z1 et de i'z2, par exemple sensiblement égale à 800 mA, a montré de bons résultats.

En établissant une transition 113 applicable aux roues arrière comparable à la transition 108 applicable aux roues avant, la transition 113 pour passer de l'étape 112 à l'étape 114 est validée dès que le véhicule 10 a parcouru une distance X2 représentative d'une somme de longueur de rampant montant X1 et d'empattement Xe.

Le coefficient d'amortissement moins élevé sur les roues arrière obtenu en étape 114, a un effet comparable toute proportion gardée à celui obtenu en étape 111 sur les roues avant.

Une variante possible de mise en œuvre du procédé selon l'invention peut consister à activer préalablement à l'étape 112, une étape 106 supplémentaire dès validation de la transition 103 et avant validation de la transition 109.

L'étape 106 consiste à positionner le courant électrique iar de pilotage d'amortisseur arrière sur une cinquième valeur de courant i'z1+ comprise entre la troisième valeur i'z2 et la quatrième valeur i'z3 de courant, tant que le véhicule 10 n'a pas parcouru la distance Xe égale à l'empattement du véhicule après détection du rampant montant sur les roues avant.

Ceci permet de préparer une élévation progressive de coefficient d'amortissement sur les roues arrière. Notamment une valeur i'z1+ supérieure à la valeur i'z1, permet de lutter contre un enfoncement trop prononcé des amortisseurs arrière provoqué par l'élévation de l'avant du véhicule sur le rampant montant, non absorbée par une compression suffisante des amortisseurs avant du fait du durcissement de ces amortisseurs par la valeur de courant iz2.

Une étape 118 consiste à positionner le courant électrique iav de pilotage d'amortisseur avant sur une sixième valeur de courant iz4 comprise entre une valeur, présentée en trait fort sur la figure 4 pour la zone 5, inférieure à la deuxième valeur de courant iz3 et une valeur, présentée en trait pointillé sur la figure 4 pour la zone 4, sensiblement égale à la valeur de courant i'z2.

Une transition 115 de passage de l'étape 111 à l'étape 118, est validée par une valeur de signal DDA (Descente Dos d'Ane) qui indique une détection de rampant descendant. Dans l'exemple illustré par la figure 2, on a choisi d'indiquer une détection de rampant descendant par un passage de zéro à un du signal DDA. Ce choix sera conservé dans la suite de la description par souci de cohérence mais on comprendra qu'il est purement conventionnel et que tout autre choix de valeurs équivalentes peut convenir.

On pourrait imaginer que le signal DDA de détection de rampant descendant soit produit par un capteur dédié à cet effet, par exemple l'accéléromètre vertical ou autre mentionné ci-dessus, ou encore par un contrôle de distance parcourue Dp si la longueur du plateau en zone 3 est connue.

On peut aussi prévoir une séquence d'étapes de procédé permettant de détecter le rampant descendant sans autres capteurs que ceux existant déjà habituellement aujourd'hui sur la grande majorité des véhicules, en prolongement des étapes précédemment décrites en référence à la figure 3.

La séquence d'étapes dédiée à la détection de rampant descendant, est exécutée en permanence en temps réel à la suite de l'étape 210 de détection de rampant montant, par validation d'une transition 211 qui assure que les roues avant ont quitté le rampant montant.

La longueur du rampant montant est rarement supérieure à l'empattement du véhicule. Dans la majorité des cas, on peut espérer raisonnablement que les roues avant décélèrent après franchissement du rampant montant pour atteindre sur le plateau en zone 3, une vitesse de rotation comparable à celle des roues arrière n'ayant pas encore atteint le rampant montant. Un passage du différentiel Δ de mesures temps réel de vitesses de roues ω1, ω2, ω3, ω4 en dessous d'un seuil S3 positif et inférieur au seuil S2, constitue alors un bon critère de validation de la transition 211. On remarquera que ce critère reste valable dans le cas peu probable ou le rampant montant est de longueur supérieure à l'empattement.

La séquence particulière d'étapes du procédé, dédiée à la détection de rampant descendant, débute alors par une étape 212 de veille en attente de validation d'une transition 205 pour passer à des étapes suivantes, sous réserve que la vitesse V du véhicule est inférieure à la vitesse Vs de seuil.

L'étape de veille peut consister à réarmer la temporisation t des étapes 206 et 208 de façon à retourner en étape 204 si aucun rampant descendant n'est détecté à expiration de la durée limité tl. On notera que l'on peut prendre la durée limite tl de valeur fixe ou inversement proportionnelle à la vitesse v du véhicule, ou encore que l'on peut remplacer la durée limite tl par une longueur limite de plateau en zone 3 en remplaçant la durée t par une mesure temps réel de distance de déplacement du véhicule.

Un franchissement du quatrième seuil S4, provoqué par une valeur du différentiel Δ de mesures temps réel qui devient supérieure à la valeur positive du deuxième seuil S4, éventuellement égal au seuil S2, valide alors la transition 213 qui fait passer le procédé à une étape 214. On notera que les valeurs de seuil S1 et S3 peuvent être ajustées en phase d'essai du véhicule prototype. Les valeurs de seuil S2 et S4 peuvent aussi être ajustées en phase d'essai du véhicule prototype ou prédéterminées par calcul trigonométrique simple si on connaît le ou les angles de pentes des rampants montant et descendant.

L'étape 214 permet de détecter le rampant descendant en positionnant la valeur du signal DDA (Descente Dos d'Ane) par exemple à 1 en cohérence avec l'exemple illustré sur par la figure 2, sachant bien que toute autre valeur équivalente et non nécessairement binaire, en cohérence avec celle retenue pour activer les étapes de la figure 2 convient.

Revenant à l'étape 118 expliquée en référence à la figure 2, une valeur de courant iz4 élevée, comme celle représentée en pointillés sur la figure 4 en zone 4, aurait pour effet de lutter ardemment contre la détente brutale sur le train avant du véhicule que l'on observe habituellement avec des amortisseurs non pilotés. Cependant, les essais ont montré qu'une lutte trop ardente contre la détente à l'abord par les roues avant du rampant descendant, pouvait avoir pour effet de faire plonger l'avant du véhicule jusqu'à une butée des roues avant en sortie de zone 4 comparable à celle observable en saillie d'attaque précédemment décrite. Finalement, les essais ont montré qu'une valeur de courant iz4 juste suffisante pour éviter une détente trop brutale convenait. Notamment une valeur de courant iz4 comprise entre la valeur de courant iz1 et la valeur de courant iz3, par exemple de l'ordre de 750 mA sur la figure 4, permet, dès détection du rampant descendant de dos d'âne, de réduire correctement le coefficient d'amortissement sur les roues avant pour bien amortir la détente sur lesdites roues avant.

La transition 115, validée par la détection de rampant descendant sur les roues avant, fait aussi passer le procédé de l'étape 114 à une étape 121 qui consiste à positionner le courant électrique iar de pilotage d'amortisseur arrière sur une huitième valeur de courant i'z4 comprise entre la troisième valeur de courant i'z2 et la quatrième valeur de courant i'z3, pour obtenir un coefficient d'amortissement moyennement élevé sur les roues arrière.

Dans l'exemple illustré par la figure 4, la valeur de courant i'z4 est égale à valeur de courant i'z3. En d'autres termes, valeur de courant électrique iar de pilotage d'amortisseur arrière n'est sur l'exemple illustré par la figure 4, pas affecté par le passage des roues avant sur le rampant descendant.

Après validation de la transition 115 par détection du rampant descendant, une transition 122 est validée dès que le véhicule 10 a parcouru la deuxième distance Xe égale à l'empattement du véhicule, en d'autres termes ici encore la distance qui sépare les roues avant des roues arrière. La validation de la transition 122 correspond à l'atteinte du rampant descendant par les roues arrière.

La transition 122 active une étape 123 consistant à positionner le courant électrique iar de pilotage d'amortisseur arrière sur une neuvième valeur de courant i'z5 comprise entre la deuxième valeur de courant iz3 et la troisième valeur de courant i'z2 dès que le véhicule 10 a parcouru la distance Xe égale à l'empattement du véhicule telle que mesurée en étape 116.

Dans l'exemple illustré par la figure 4, une valeur de courant i'z5 sensiblement égale à 750 mA permet d'augmenter le coefficient d'amortissement sur les roues arrière, juste suffisamment pour éviter un rebondissement trop fort sur les roues arrière.

Une transition 124 est validée lorsque la distance parcourue Dp mesurée en étape 116 devient supérieure à une valeur XMd représentative de la sortie complète du dos d'âne par le véhicule.

Une validation de la transition 124 fait revenir le procédé en étape 102 dans laquelle les signaux MDA et MDD sont remis à zéro et les courants iav et iar sont repositionnés à leurs valeurs respectives iz1 et i'z1 calculées hors dos d'âne.

Une variante de mise en œuvre du procédé peut consister à s'assurer que le véhicule a parcouru une distance minimale Xm après détection d'atteinte du rampant montant par les roues avant pour pouvoir réduire le courant électrique iav de pilotage d'amortisseur avant comme c'est le cas pour la détection d'atteinte du rampant descendant par les roues avant. Cette variante peut s'avérer utile pour des franchissements de ralentisseurs à succession courte de rampant montant et de rampant descendant.

Dans le mode de représentation schématique sous forme de grafcet de la figure 2, cette variante se traduit par ajout d'une étape 110 qui prolonge l'étape 104 de mesure de distance Dp parcourue par le véhicule après détection du rampant montant.

Une transition 107 validée par une valeur de distance parcourue supérieure à la distance minimale Xm, fait passer le procédé de l'étape 104 à l'étape 110 de sorte que la transition 115 ne peut faire passer le procédé de l'étape 111 à l'étape 118 que si au moins les étapes 110 et 111 sont actives. L'étape 110 continue simplement à mesurer la distance parcourue qui avait été initialisée à zéro en début d'étape 104.

Par mesure de sécurité, une transition 117 est validée lorsque la distance Dp parcourue qui est mesurée en étape 104, ou éventuellement en étape 110, devient supérieure à une distance maximale XMm qui ne laisse plus espérer raisonnablement de détecter un rampant descendant de dos d'âne.

Une validation de la transition 117 fait alors revenir le procédé en étape 102, en attente éventuelle d'une nouvelle détection de rampant montant caractérisant d'un autre ralentisseur.

En variante aussi, le procédé peut comprendre une étape 120 qui consiste à positionner ledit courant électrique iav de pilotage d'amortisseur avant sur une septième valeur de courant iz5 supérieure à la sixième valeur de courant iz4 dès que le véhicule 10 a parcouru après détection du rampant descendant, une distance X3 représentative d'une somme de longueur de rampant descendant et d'empattement, pour réaugmenter le coefficient d'amortissement sur les roues avant lorsque les roues arrière approchent de la fin du rampant descendant. Cette variante correspond sur la figure 4 à la ligne en pointillés qui chevauche les zones 5 et 6 avec une valeur iz5 sensiblement égale à 1000 mA.

En reprenant la représentation grafcet de la figure 2, cette variante se traduit par une transition 119 qui fait passer le procédé de l'étape 118 à l'étape 120 lorsque la distance parcourue mesurée en étape 116, est supérieure à X3.

On notera aussi sur la figure 4 que les changements de valeur des courants dans les amortisseurs sont rampés de façon à être progressifs.

## Revendications

1. Procédé de pilotage d'amortisseurs de véhicule (10) au passage d'un dos d'âne (11), **caractérisé en ce qu'**il comprend des étapes consistant à :
- calculer (202) en permanence un différentiel (Δ) de mesures temps réel de vitesses de roues (ω1, ω2, ω3, ω4) ;
- détecter (210) un rampant montant après franchissement (205, 207) d'au moins un seuil (S1, S2) par ledit différentiel (Δ) de mesures temps réel ;
- positionner (105) un courant électrique (iav) de pilotage d'amortisseur avant sur une première valeur de courant (iz2) maximale à détection (103) du rampant montant de dos d'âne pour obtenir un coefficient d'amortissement élevé sur les roues avant ;
- positionner (111) ledit courant électrique (iav) de pilotage d'amortisseur avant sur une deuxième valeur de courant (iz3) inférieure à ladite première valeur de courant (iz2) dès que le véhicule (10) a parcouru (108) après détection (103) du rampant montant, une première distance (X1) représentative d'une longueur du rampant montant, pour obtenir un coefficient d'amortissement moins élevé sur les roues avant.

2. Procédé de pilotage selon la revendication 1, **caractérisé en ce qu'**il comprend des étapes consistant à :
- positionner (112) un courant électrique (iar) de pilotage d'amortisseur arrière sur une troisième valeur de courant (i'z2) maximale dès que le véhicule (10) a parcouru (109) après détection (103) du rampant montant, une deuxième distance (Xe) égale à l'empattement du véhicule, pour obtenir un coefficient d'amortissement élevé sur les roues arrière ;
- positionner (114) ledit courant électrique (iar) de pilotage d'amortisseur arrière sur une quatrième valeur de courant (i'z3) inférieure à ladite troisième valeur de courant (i'z2) dès que le véhicule (10) a parcouru (113) après détection (103) du rampant montant, une troisième distance (X2) représentative d'une somme de longueur de rampant montant et d'empattement, pour obtenir un coefficient d'amortissement moins élevé sur les roues arrière.

3. Procédé de pilotage selon la revendications 2, **caractérisé en ce qu'**il comprend une étape consistant à :
- positionner (106) ledit courant électrique (iar) de pilotage d'amortisseur arrière sur une cinquième valeur de courant (i'z1+) comprise entre ladite troisième et ladite quatrième valeur de courant, après détection (103) du rampant montant et tant que le véhicule (10) n'a pas parcouru (109) ladite deuxième distance (Xe) égale à l'empattement du véhicule, pour préparer une élévation de coefficient d'amortissement sur les roues arrière.

4. Procédé de pilotage selon l'une des revendications 1 à 3, **caractérisé en ce qu'**il comprend des étapes consistant à :
- positionner (118) ledit courant électrique (iav) de pilotage d'amortisseur avant sur une sixième valeur de courant (iz4) inférieure à la deuxième valeur de courant (iz3), dès détection (115) d'un rampant descendant de dos d'âne pour réduire le coefficient d'amortissement sur les roues avant ;
- positionner (120) ledit courant électrique (iav) de pilotage d'amortisseur avant sur une septième valeur de courant (iz5) supérieure à ladite sixième valeur de courant (iz4) dès que le véhicule (10) a parcouru (119) après détection (115) du rampant descendant, une quatrième distance (X3) représentative d'une somme de longueur de rampant descendant et d'empattement, pour réaugmenter le coefficient d'amortissement sur les roues avant.

5. Procédé de pilotage selon l'une des revendications 2 ou 3, **caractérisé en ce qu'**il comprend des étapes consistant à :
- positionner (121) ledit courant électrique (iar) de pilotage d'amortisseur arrière sur une huitième valeur de courant (i'z4) comprise entre ladite troisième valeur de courant (i'z2) et ladite quatrième valeur de courant (i'z3) dès détection (115) de rampant descendant, pour obtenir un coefficient d'amortissement moyennement élevé sur les roues arrière ;
- positionner (123) ledit courant électrique (iar) de pilotage d'amortisseur arrière sur une neuvième valeur de courant (i'z5) comprise entre ladite deuxième valeur de courant (iz3) et ladite troisième valeur de courant (i'z2) dès que le véhicule (10) a parcouru (113) après détection (103) du rampant descendant, ladite deuxième distance (Xe) égale à l'empattement du véhicule, pour obtenir un coefficient d'amortissement plus élevé sur les roues arrière.

6. Procédé de pilotage selon l'une des revendications 1 à 5, **caractérisé en ce que** le différentiel (Δ) est égal au maximum des vitesses de rotation (ω1, ω2) des roues avant, duquel on soustrait la moyenne des vitesses de rotation (ω1, ω2, ω3, ω4) des roues du véhicule.

7. Procédé de pilotage selon la revendication 6, **caractérisé en ce que** le rampant montant est détecté après un premier franchissement (205) de seuil négatif (S1) suivi d'un deuxième franchissement (207) de seuil positif (S2).

8. Procédé de pilotage selon l'une des revendications 1 à 6, **caractérisé en ce qu'**il comprend une étape consistant à :
- détecter (214) un rampant descendant après franchissement (211, 213) d'au moins un seuil (S3, S4) par ledit différentiel (Δ) de mesures temps réel après avoir détecté (210) le rampant montant.

9. Produit programme d'ordinateur comprenant des instructions qui conduisent le calculateur selon la revendication 10 à effectuer les étapes du procédé selon l'une des revendications 1 à 8 lorsque ces instructions sont exécutées par le processeur du calculateur.

10. Calculateur pour piloter des amortisseurs de véhicule automobile comprenant une interface électronique de communication avec un réseau embarqué de manière à recevoir une valeur mesurée de la vitesse de rotation de chaque roue, un processeur pour exécuter un programme de façon à générer des courants électriques de pilotage des amortisseurs et une mémoire qui héberge le produit programme d'ordinateur comprenant des instructions pour effectuer les étapes du procédé selon l'une des revendications 1 à 8 lorsque ces instructions sont exécutées par le processeur.

11. Véhicule automobile (10) comprenant un réseau embarqué et un calculateur selon la revendication 10, connecté audit réseau embarqué.

## Patentansprüche

1. Verfahren zur Steuerung von Fahrzeugstoßdämpfern (10) beim Fahren über eine Straßenschwelle (11), **dadurch gekennzeichnet, dass** es die folgenden Schritte aufweist:
- kontinuierliches Berechnen (202) einer Differenz (Δ) von Echtzeitmessungen von Raddrehzahlen (ω1, ω2, ω3, ω4);
- Erkennen (210) einer ansteigenden Schräge nach dem Überschreiten (205, 207) mindestens eines Schwellenwerts (S1, S2) durch die Differenz (Δ) von Echtzeitmessungen;
- Positionieren (105) eines elektrischen Stroms (iav) zur Steuerung des vorderen Stoßdämpfers auf einen ersten maximalen Stromwert (iz2) beim Erkennen (103) der ansteigenden Schräge der Straßenschwelle, um einen hohen Dämpfungskoeffizienten an den Vorderrädern zu erhalten;
- Positionieren (111) des elektrischen Stroms (iav) zur Steuerung des vorderen Stoßdämpfers auf einen zweiten Stromwert (iz3), der niedriger ist als der erste Stromwert (iz2), sobald das Fahrzeug (10) nach dem Erkennen (103) der ansteigenden Schräge eine erste Strecke (X1) zurückgelegt (108) hat, die für eine Länge der ansteigenden Schräge repräsentativ ist, um einen weniger hohen Dämpfungskoeffizienten an den Vorderrädern zu erhalten.

2. Verfahren zur Steuerung nach Anspruch 1, **dadurch gekennzeichnet, dass** es die folgenden Schritte aufweist:
- Positionieren (112) eines elektrischen Stroms (iar) zur Steuerung des hinteren Stoßdämpfers auf einen dritten maximalen Stromwert (i'z2), sobald das Fahrzeug (10) nach dem Erkennen (103) der ansteigenden Schräge eine zweite Strecke (Xe) zurückgelegt (109) hat, die gleich dem Radstand des Fahrzeugs ist, um einen hohen Dämpfungskoeffizienten an den Hinterrädern zu erhalten;
- Positionieren (114) des elektrischen Stroms (iar) zur Steuerung des hinteren Stoßdämpfers auf einen vierten Stromwert (i'z3), der niedriger ist als der dritte Stromwert (i'z2), sobald das Fahrzeug (10) nach dem Erkennen (103) der ansteigenden Schräge eine dritte Strecke (X2) zurückgelegt (113) hat, die für eine Summe aus der Länge der ansteigenden Schräge und dem Radstand repräsentativ ist, um einen weniger hohen Dämpfungskoeffizienten an den Hinterrädern zu erhalten.

3. Verfahren zur Steuerung nach Anspruch 2, **dadurch gekennzeichnet, dass** es den folgenden Schritt aufweist:
- Positionieren (106) des elektrischen Stroms (iar) zur Steuerung des hinteren Stoßdämpfers auf einen fünften Stromwert (i'z1+), der zwischen dem dritten und dem vierten Stromwert liegt, nach Erkennen (103) der ansteigenden Schräge und solange das Fahrzeug (10) die zweite Strecke (Xe), die gleich dem Radstand des Fahrzeugs ist, nicht zurückgelegt hat (109), um eine Anhebung des Dämpfungskoeffizienten an den Hinterrädern vorzubereiten.

4. Verfahren zur Steuerung nach einem der Ansprüche 1 bis 3, **dadurch gekennzeichnet, dass** es die folgenden Schritte aufweist:
- Positionieren (118) des elektrischen Stroms (iav) zur Steuerung des vorderen Stoßdämpfers auf einen sechsten Stromwert (iz4), der kleiner als der zweite Stromwert (iz3) ist, beim Erkennen (115) einer abfallenden Schräge der Straßenschwelle, um den Dämpfungskoeffizienten an den Vorderrädern zu verringern;
- Positionieren (120) des elektrischen Stroms (iav) zur Steuerung des vorderen Stoßdämpfers auf einen siebten Stromwert (iz5), der höher ist als der sechste Stromwert (iz4), sobald das Fahrzeug (10) nach dem Erkennen (115) der abfallenden Schräge eine vierte Strecke (X3) zurückgelegt (119) hat, die für eine Summe aus der Länge der abfallenden Schräge und dem Radstand repräsentativ ist, um den Dämpfungskoeffizienten an den Vorderrädern wieder zu erhöhen.

5. Verfahren zur Steuerung nach einem der Ansprüche 2 oder 3, **dadurch gekennzeichnet, dass** es die folgenden Schritte aufweist:
- Positionieren (121) des elektrischen Stroms (iar) zur Steuerung des hinteren Stoßdämpfers auf einen achten Stromwert(i'z4), der zwischen dem dritten Stromwert (i'z2) und dem vierten Stromwert (i'z3) liegt, beim Erkennen (115) einer abfallenden Schräge, um einen mittelhohen Dämpfungskoeffizienten an den Hinterrädern zu erhalten;
- Positionieren (123) des elektrischen Stroms (iar) zur Steuerung des hinteren Stoßdämpfers auf einen neunten Stromwert (i'z5), der zwischen dem zweiten Stromwert (iz3) und dem dritten Stromwert (i'z2) liegt, sobald das Fahrzeug (10) nach dem Erkennen (103) der abfallenden Schräge die zweite Strecke (Xe) zurückgelegt (113) hat, die gleich dem Radstand des Fahrzeugs ist, um einen höheren Dämpfungskoeffizienten an den Hinterrädern zu erhalten.

6. Verfahren zur Steuerung nach einem der Ansprüche 1 bis 5, **dadurch gekennzeichnet, dass** die Differenz (Δ) gleich dem Maximum der Drehzahlen (ω1, ω2) der Vorderräder ist, von dem der Mittelwert der Drehzahlen (ω1, ω2, w3, ω4) der Räder des Fahrzeugs abgezogen wird.

7. Verfahren zur Steuerung nach Anspruch 6, **dadurch gekennzeichnet, dass** die ansteigende Schräge nach einem ersten Überschreiten (205) eines negativen Schwellenwerts (S1), gefolgt von einem zweiten Überschreiten (207) eines positiven Schwellenwerts (S2), erkannt wird.

8. Verfahren zur Steuerung nach einem der Ansprüche 1 bis 6, **dadurch gekennzeichnet, dass** es den folgenden Schritt aufweist:
- Erkennen (214) einer abfallenden Schräge nach dem Überschreiten (211, 213) mindestens eines Schwellenwerts (S3, S4) durch die Differenz (Δ) von Echtzeitmessungen nach dem Erkennen (210) der ansteigenden Schräge.

9. Computerprogrammprodukt, das Anweisungen umfasst, die den Rechner nach Anspruch 10 dazu veranlassen, die Schritte des Verfahrens nach einem der Ansprüche 1 bis 8 auszuführen, wenn diese Anweisungen vom Prozessor des Rechners ausgeführt werden.

10. Rechner zur Steuerung von Stoßdämpfern eines Kraftfahrzeugs, der eine elektronische Schnittstelle zur Kommunikation mit einem Bordnetz umfasst, um einen gemessenen Wert der Drehzahl eines jeden Rads zu empfangen, einen Prozessor zur Ausführung eines Programms, um elektrische Ströme zur Steuerung der Stoßdämpfer zu erzeugen, und einen Speicher, der das Computerprogrammprodukt speichert, das Anweisungen zur Ausführung der Schritte des Verfahrens nach einem der Ansprüche 1 bis 8 umfasst, wenn diese Anweisungen von dem Prozessor ausgeführt werden.

11. Kraftfahrzeug (10) mit einem Bordnetz und einem Rechner nach Anspruch 10, der mit dem Bordnetz verbunden ist.

## Claims

1. Method for controlling vehicle dampers (10) on passing over a speed bump (11), **characterized in that** it comprises steps consisting in:
- permanently calculating (202) a differential (Δ) of real time measurements of wheel speeds (ω1, ω2, ω3);
- detecting (210) an upward slope after the crossing (205, 207) of at least one threshold (S1, S2) by said differential (Δ) of real time measurements;
- setting (105) a front damper control electrical current (iav) to a first, maximum current value (iz2) on detection (103) of the upward slope of a speed bump to obtain a high damping coefficient on the front wheels;
- setting (111) said front damper control electrical current (iav) to a second current value (iz3) lower than said first current value (iz2) as soon as the vehicle (10) has travelled (108), after detection (103) of the upward slope, a first distance (X1) representative of a length of the upward slope, to obtain a less high damping coefficient on the front wheels.

2. Control method according to Claim 1, **characterized in that** it comprises steps consisting in:
- setting (112) a rear damper control electrical current (iar) to a third, maximum current value (i'z2) as soon as the vehicle (10) has travelled (109), after detection (103) of the upward slope, a second distance (Xe) equal to the wheel base of the vehicle, to obtain a high damping coefficient on the rear wheels;
- setting (114) said rear damper control electrical current (iar) to a fourth current value (i'z3) lower than said third current value (i'z2) as soon as the vehicle (10) has travelled (113), after detection (103) of the upward slope, a third distance (X2) representative of a sum of the upward slope length and wheel base, to obtain a less high damping coefficient on the rear wheels.

3. Control method according to Claim 2, **characterized in that** it comprises a step consisting in:
- setting (106) said rear damper control electrical current (iar) to a fifth current value (i'z1+) lying between said third and fourth current values, after detection (103) of the upward slope and as long as the vehicle (10) has not travelled (109) said second distance (Xe) equal to the wheel base of the vehicle, to prepare a raising of damping coefficient on the rear wheels.

4. Control method according to one of Claims 1 to 3, **characterized in that** it comprises steps consisting in:
- setting (118) said front damper control electrical current (iav) to a sixth current value (iz4) lower than the second current value (iz3), upon detection (115) of a downward speed bump slope to reduce the damping coefficient on the front wheels;
- setting (120) said front damper control electrical current (iav) to a seventh current value (iz5) higher than said sixth current value (iz4) as soon as the vehicle (10) has travelled (119), after detection (115) of the downward slope, a fourth distance (X3) representative of a sum of downward slope length and wheelbase, to again increase the damping coefficient on the front wheels.

5. Control method according to one of Claims 2 and 3, **characterized in that** it comprises steps consisting in:
- setting (121) said rear damper control electrical current (iar) to an eighth current value (i'z4) lying between said third current value (i'z2) and said fourth current value (i'z3) upon detection (115) of a downward slope, to obtain a moderately high damping coefficient on the rear wheels;
- setting (123) said rear damper control electrical current (izr) to a ninth current value (i'z5) lying between said second current value (iz3) and said third current value (i'z2) as soon as the vehicle (10) has travelled (113), after detection (103) of the downward slope, said second distance (Xe) equal to the wheel base of the vehicle, to obtain a higher damping coefficient on the rear wheels.

6. Control method according to one of Claims 1 to 5, **characterized in that** the differential (Δ) is equal to the maximum of the rotation speeds (ω1, (2) of the front wheels, from which is subtracted the average of the rotation speeds (ω1, ω2, ω3, ω4) of the wheels of the vehicle.

7. Control method according to Claim 6, **characterized in that** the upward slope is detected after a first crossing (205) of a negative threshold (S1) followed by a second crossing (207) of a positive threshold (S2).

8. Control method according to one of Claims 1 to 6, **characterized in that** it comprises a step consisting in:
- detecting (214) a downward slope after the crossing (211, 213) of at least one threshold (S3, S4) by said differential (Δ) of real time measurements after having detected (210) the upward slope.

9. Computer program product comprising instructions which cause the computer according to Claim 10 to perform the steps of the method according to one of Claims 1 to 8 when these instructions are executed by the processor of the computer.

10. Computer for controlling motor vehicle dampers comprising an electronic communication interface with an onboard network so as to receive a measured value of the rotation speed of each wheel, a processor for executing a program so as to generate electrical currents for controlling the dampers and a memory which hosts the computer program product comprising instructions to perform the steps of the method according to one of Claims 1 to 8 when these instructions are executed by the processor.

11. Motor vehicle (10) comprising an onboard network and a computer according to Claim 10, connected to said onboard network.
